# DEMANDE DE BREVET EUROPEEN

(11) **EP 3 410 250 A1**
(43) Date de publication de la demande: **05.12.2018**
(21) Numéro de dépôt: 18170824.9
(22) Date de dépôt: 04.05.2018
(51) Int. Cl.: G05D 1/08, B64C 19/00, G05D 1/10

(54) **PROCÉDÉ ET DISPOSITIF DE CONTRÔLE DE LA TRAJECTOIRE D'UN AÉRONEF SUIVEUR PAR RAPPORT À DES VORTEX GÉNÉRÉS PAR UN AÉRONEF MENEUR**

(30) Priorité: 30.05.2017 FR 1754760
(71) Demandeur: Airbus Operations S.A.S., 31060 Toulouse (FR)
(72) Inventeur: TORRALBA, José, 31330 Merville (FR); LEBAS, Julie, 31200 Toulouse (FR)
(74) Mandataire: Gicquel, Olivier Yves Gérard

(57) **Abrégé**

- Procédé et dispositif de contrôle de la trajectoire d'un aéronef suiveur par rapport à des vortex générés par un aéronef meneur.
- Le dispositif de contrôle de la trajectoire d'un aéronef suiveur (AC2) par rapport à des vortex (V1, V2) générés par un aéronef meneur (AC1), ces aéronefs (AC1, AC2) volant en formation (F), comporte une unité pour déterminer, à l'aide d'un modèle de transport de vortex, une position de sécurité (PS), dans laquelle l'aéronef suiveur (AC2) n'est pas soumis à des effets des vortex (V1, V2) générés par l'aéronef meneur (AC1) tout en restant en vol en formation (F), une unité pour déterminer, à l'aide d'un modèle de signature de vortex, une position optimale (PO), dans laquelle l'aéronef suiveur (AC2) volant en formation (F) bénéficie d'effets d'au moins l'un (V1) des vortex (V1, V2), et une unité de commande pour amener et maintenir l'aéronef suiveur (AC2) dans la position de sécurité (PS), si et aussi longtemps que des conditions prédéterminées sont remplies, et sinon pour le reste du vol en formation, pour l'amener et le maintenir dans la position optimale (PO).

## Description

La présente invention concerne un procédé et un dispositif de contrôle de la trajectoire d'un aéronef, dit aéronef suiveur, par rapport à des vortex générés par un aéronef dit aéronef meneur qui le précède, lesdits aéronefs meneur et suiveur réalisant un vol en formation.

Un vol en formation comprend au moins deux aéronefs, notamment des avions de transport, à savoir un aéronef meneur (ou leader), et un ou plusieurs aéronefs suiveurs. Les aéronefs suiveurs volent en suivant l'aéronef qu'ils suivent directement (à savoir l'aéronef meneur ou un autre aéronef suiveur) de manière à maintenir un espacement constant entre eux. Dans une application particulière, notamment en vol de croisière, les aéronefs volent les uns derrière les autres au même niveau de vol, avec le même cap et la même vitesse. On peut également prévoir d'appliquer aux aéronefs suiveurs des ordres de commande de vitesse qui sont tels qu'ils permettent auxdits aéronefs suiveurs d'avoir la même position, la même vitesse, et la même accélération qu'avait l'aéronef meneur, à des durées antérieures données.

On sait qu'un aéronef en vol génère dans son sillage des vortex (ou turbulences de sillage). On entend par vortex (ou turbulence de sillage), une turbulence (ou un tourbillon) aérodynamique qui se forme en aval d'un aéronef.

Un avion en vol génère dans son sillage,deux vortex, à savoir un vortex partant de chacune de ses ailes du fait de la différence de pression entre l'intrados et l'extrados de l'aile, et de la déflexion de l'écoulement d'air vers le bas qui en résulte. Ces vortex sont des tourbillons contrarotatifs et sont caractérisés par un champ de vent globalement ascendant à l'extérieur des tourbillons et globalement descendant entre les tourbillons.

A partir des ailes, les vortex tendent d'abord à se rapprocher l'un de l'autre, puis à maintenir une distance plus ou moins constante entre eux tout en perdant de l'altitude par rapport à l'altitude à laquelle ils ont été générés.

Du fait de cette configuration des vortex, il est intéressant, pour un aéronef suiveur qui suit l'aéronef meneur générant les vortex, de pouvoir profiter des vents ascendants générés par les vortex afin de réduire sa consommation de carburant.

On connaît des documents, tel que la demande de brevet US2014/214243, qui décrivent des procédé de contrôle de la trajection de l'aéronef suiveur par rapport à des vortex générés par un aéronef meneur et qui permettent de limiter les mouvements de l'aéronef suiveur lors du vol en formation afin que l'aéronef suiveur reste dans une position optimale par rapport au vortex pour bénéficier des vents ascendants.

Toutefois, il peut arriver au cours d'un vol en formation, en raison d'une manoeuvre ou d'un événement mineur, que l'aéronef suiveur s'écarte d'un vortex, de sorte qu'il ne bénéficie plus des avantages du vortex. De plus, un tel écartement lui fait perdre le bénéficie du vol en formation.

La présente invention a pour objet de remédier à cet inconvénient et concerne un procédé de contrôle de la trajectoire d'un aéronef suiveur par rapport à des vortex générés par un aéronef meneur, tel que revendiqué dans la revendication 1.

Grâce à l'invention, à la survenue d'une manoeuvre particulière ou d'un événement mineur, l'aéronef suiveur se place dans une position de sécurité (dépourvue de vortex) sans rompre le vol en formation, si et aussi longtemps que des conditions prédéterminées sont vérifiées. Cette position de sécurité est telle que l'aéronef suiveur n'est pas soumis à des effets des vortex générés par l'aéronef meneur.

De plus, grâce à l'invention, pour le reste du vol, (et le cas échéant de ramener) l'aéronef suiveur se maintient (ou revient) dans la position optimale, dans laquelle il bénéficie des effets des vortex générés par l'aéronef meneur, ce qui réduit la consommation de carburant.

Ledit procédé permet donc de remédier à l'inconvénient précité et ainsi de conserver toujours les avantages, notamment en termes de coût, du vol en formation, et le plus possible les avantages supplémentaires dus aux effets des vortex.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :
- la figure 1 est le schéma synoptique d'un mode de réalisation particulier d'un dispositif de contrôle conforme à l'invention ;
- la figure 2 est une représentation schématique d'un vol en formation montrant un aéronef meneur générant des vortex et deux positions possibles pour un aéronef suiveur par rapport à ces vortex ; et
- la figure 3 est le schéma synoptique d'une unité de détermination de position optimale du dispositif de contrôle.

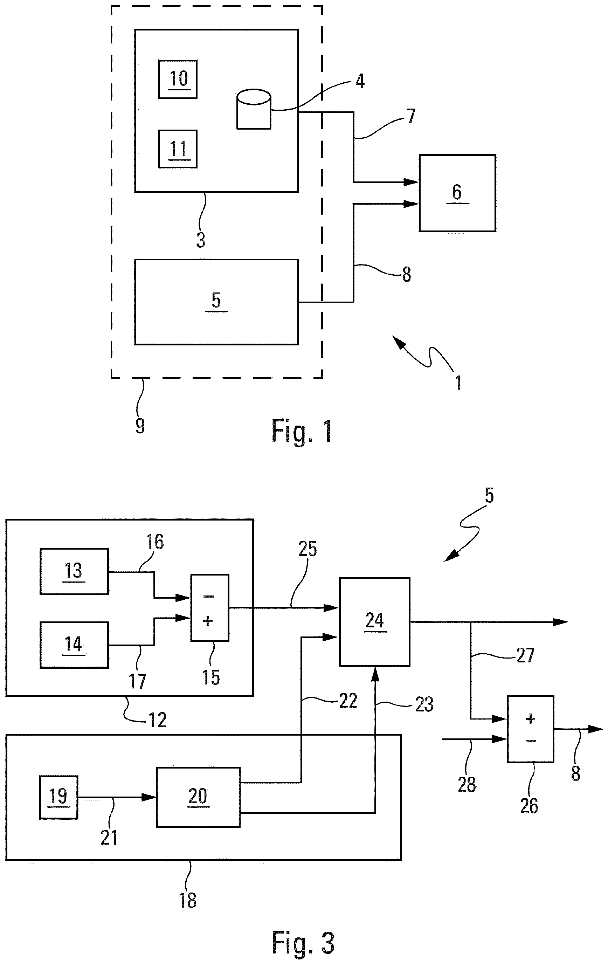

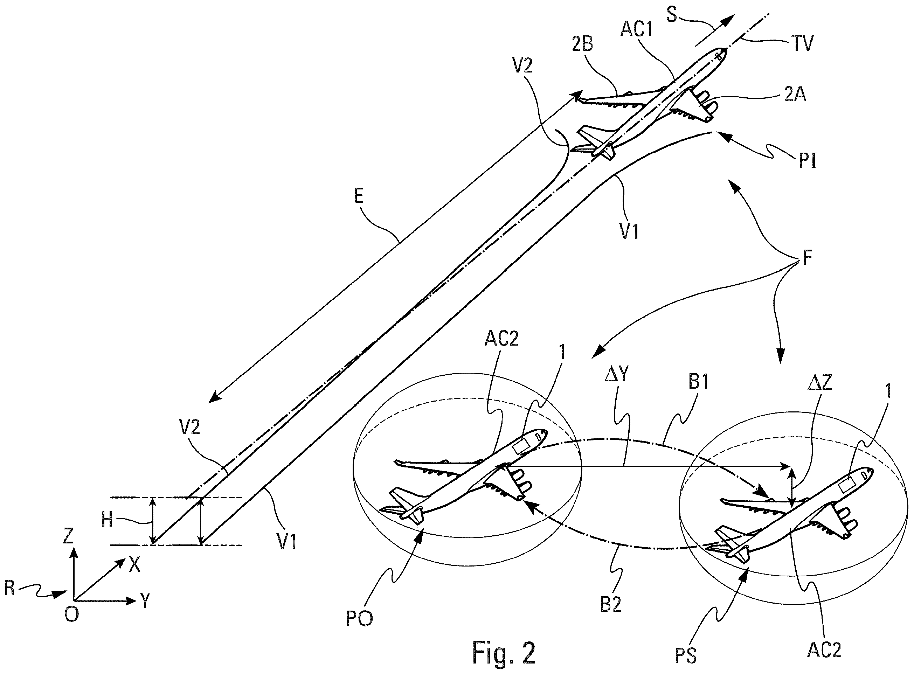

Le dispositif 1 permettant d'illustrer l'invention et représenté de façon schématique sur la figure 1, est un dispositif de contrôle de la trajectoire d'un aéronef suiveur AC2, par rapport à des vortex V1 et V2 générés par un aéronef meneur AC1 qui le précède, comme illustré sur la figure 2. Lesdits aéronefs meneur et suiveur réalisent un vol en formation F. Le dispositif 1 est embarqué sur l'aéronef suiveur AC2.

De façon usuelle, la formation F comprend l'aéronef meneur AC1 et un ou plusieurs aéronef(s) suiveur(s), à savoir un seul aéronef suiveur AC2 sur l'exemple de la figure 2, qui suivent l'aéronef meneur AC1 (situé à une position PI) de manière à maintenir un espacement constant E entre eux. Dans une application préférée, en particulier en vol de croisière, les aéronefs AC1 et AC2 volent l'un derrière l'autre au même niveau de vol, avec le même cap et la même vitesse.

Dans un mode de réalisation préféré, le dispositif 1 fait partie d'une unité (non représentée spécifiquement) de gestion de vol en formation, qui est embarquée sur l'aéronef suiveur AC2. Une telle unité est configurée pour gérer le vol en formation au moins pour l'aéronef suiveur AC2.

L'aéronef meneur AC1 suit une trajectoire de vol TV, et il génère dans son sillage, principalement, deux vortex V1 et V2, à savoir un vortex V1 et V2 partant de chacune de ses ailes 2A et 2B du fait de la différence de pression entre l'intrados et l'extrados de chaque aile, et de la déflexion de l'écoulement d'air vers le bas qui en résulte. Ces vortex V1 et V2 sont des tourbillons contrarotatifs et sont caractérisés par un champ de vent globalement ascendant à l'extérieur des tourbillons et globalement descendant entre les tourbillons. A partir des ailes 2A et 2B, les vortex V1 et V2 tendent d'abord à se rapprocher l'un de l'autre, puis à maintenir une distance plus ou moins constante entre eux tout en perdant de l'altitude par rapport à l'altitude à laquelle ils ont été générés, comme montré sur la figure 2 par une double flèche H.

Pour faciliter la description suivante, on détermine un repère R orthonormé, représenté sur la figure 2 et formé de trois axes (ou directions) X, Y et Z orthogonaux entre eux et passant par un point O, qui sont tels que :
- X est l'axe longitudinal du fuselage de l'aéronef meneur AC1 orienté positivement dans le sens d'avancement S de l'aéronef meneur AC1 ;
- Z est un axe vertical qui forme avec l'axe X un plan correspondant au plan vertical de symétrie de l'aéronef meneur AC1 ; et
- Y est un axe transversal qui est orthogonal auxdits axes X et Z.

Bien que, pour des raisons de clarté, le point O soit représenté à l'extérieur de l'aéronef meneur AC1 sur la figure 2, il peut correspondre au centre de gravité de l'aéronef meneur AC1.

Le dispositif 1 comporte, comme représenté sur la figure 1 :
- une unité 3 de détermination de position. L'unité 3 de détermination de position est configurée pour déterminer, à l'aide d'un modèle de transport de vortex précisé ci-dessous et enregistré par exemple dans une base de données 4, une position de sécurité PS (figure 2), dans laquelle l'aéronef suiveur AC2 n'est pas soumis à des effets des vortex V1 et V2 générés par l'aéronef meneur AC1 tout en restant en vol en formation ;
- une unité 5 de détermination de position. L'unité 5 de détermination de position est configurée pour déterminer, à l'aide d'un modèle de signature de vortex précisé ci-dessous, une position optimale PO (figure 2), dans laquelle l'aéronef suiveur AC2 volant en formation bénéficie d'effets d'au moins l'un des vortex générés par l'aéronef meneur AC1, à savoir le vortex V1 (en l'occurrence de droite) le plus proche de l'aéronef suiveur AC2 ; et
- une unité de commande 6 configurée :
   - pour amener et pour maintenir l'aéronef suiveur AC2 dans ladite position de sécurité PS déterminée par l'unité 3 de détermination de position et reçue par l'intermédiaire d'une liaison 7, si et aussi longtemps que des conditions prédéterminées (précisées ci-dessous) sont remplies ; et
   - sinon (dans une situation de vol normale où aucune de ces conditions prédéterminées n'est remplie), pour l'amener et pour le maintenir dans la position optimale PO, en agissant conjointement avec l'unité 5 de détermination de position (comme illustré par une liaison 8).

Dans un mode de réalisation particulier, les unités 3 et 5 sont intégrées dans une seule et même unité centrale de traitement 9.

L'unité de commande 6 comprend tous les moyens usuels nécessaires pour réaliser un pilotage, manuel ou automatique, de l'aéronef suiveur AC2. Cette unité de commande 6 n'est pas décrite davantage dans la description suivante.

Ainsi, le dispositif 1 permet d'amener l'aéronef suiveur AC2 dans une position de sécurité PS (dépourvue de vortex) sans rompre le vol en formation, si et aussi longtemps que des conditions particulières prédéterminées sont vérifiées. Comme précisé ci-après, il peut s'agir d'événements mineurs ou de manoeuvres particulières ou de situations d'urgence nécessitant une mise en sécurité. Cette position de sécurité PS est telle que l'aéronef suiveur AC2 n'est pas soumis à des effets des vortex V1 et V2 générés par l'aéronef meneur AC1. Comme précisé ci-dessous, cette position de sécurité PS peut être atteinte rapidement par l'aéronef suiveur AC2.

Dans un mode de réalisation particulier, lesdites conditions prédéterminées comprennent au moins l'une des conditions suivantes :
- au moins une condition météorologique particulière ;
- au moins une manoeuvre particulière des aéronefs meneur et suiveur volant en formation, telle qu'un changement de cap ou de niveau.
- une approche d'au moins un aéronef (autre que l'aéronef meneur et l'aéronef suiveur) dudit vol en formation ;
- au moins une situation de vol dégradée d'au moins l'un des aéronefs meneur et suiveur.

En revanche, pour le reste du vol (en dehors de ces conditions particulières), le dispositif 1 a pour but de maintenir (et de ramener le cas échéant) l'aéronef suiveur AC2 dans la position optimale PO, dans laquelle il bénéficie des effets du vortex V1 généré par l'aéronef meneur AC1, ce qui permet de réduire sa consommation de carburant.

La position optimale PO est telle que :
- l'aéronef suiveur AC2 est pilotable ;
- elle ne perturbe pas les systèmes, la structure et les moteurs de l'aéronef suiveur AC2 ;
- elle ne génère pas un inconfort pour les passagers de l'aéronef suiveur AC2 ; et
- elle apporte des bénéfices, notamment en termes de consommation de carburant, pour l'aéronef suiveur AC2.

Ledit dispositif 1 permet ainsi à l'aéronef suiveur AC2, sur lequel il est monté, de conserver toujours les avantages, notamment en termes de coût, du vol en formation, et le plus possible les avantages supplémentaires des effets positifs du vortex.

Dans un mode de réalisation particulier, l'unité 3 de détermination de position comporte, comme représenté sur la figure 1, une unité de calcul 10 qui est configurée pour déterminer, à l'aide du modèle de transport de vortex stocké dans la base de données 4, un positionnement géographique au moins du vortex le plus proche de l'aéronef suiveur AC2, à savoir le vortex V1 de droite sur la figure 2. Le modèle de transport du vortex dépend (de façon usuelle) de caractéristiques de l'aéronef meneur AC1 (masse, envergure, ...) et de caractéristiques du point de vol (vitesse de l'aéronef suiveur AC2, vent, ...).

L'unité 3 de détermination de position comporte également une unité de calcul 11 qui est configurée pour déterminer comme position de sécurité PS, une position située à l'extérieur du positionnement géographique du vortex V1 déterminé pour l'unité de calcul 10. Cette position de sécurité PS est écartée au moins latéralement (selon l'axe Y) par rapport à la trajectoire TV de l'aéronef meneur AC1 d'une distance prédéterminée, par exemple 300 mètres. De préférence, la position de sécurité PS est une position qui est également écartée verticalement (selon l'axe Z) par rapport à la trajectoire TV corrigée du vent de l'aéronef meneur AC2, comme montré sur la figure 2.

Par ailleurs, l'unité 5 de détermination de position du dispositif 1 comporte, comme représenté sur la figure 3, un ensemble de calcul 12 configuré pour déterminer la position optimale PO à l'aide du modèle de signature de vortex et de mesures courantes représentatives de la signature ou permettant de calculer la signature, réalisées sur l'aéronef suiveur AC2.

Pour ce faire, l'ensemble de calcul 12 comprend :
- une unité 13 intégrant le modèle de signature de vortex et permettant de définir définissant une signature prédite (ou estimée) ;
- un ensemble 14 de mesure et de calcul comprenant notamment des capteurs usuels de l'aéronef suiveur AC2, ledit ensemble 14 étant configuré pour réaliser des mesures courantes sur l'aéronef suiveur AC2 et pour en déduire une signature courante (dite mesurée) à partir de ces mesures courantes ; et
- un élément de calcul 15 qui est relié par l'intermédiaire de liaisons 16 et 17, respectivement, à la base de données 13 et à l'ensemble 14, et qui calcule la différence entre la signature mesurée et la signature prédite.

Le modèle de signature de vortex utilisé par l'ensemble de calcul 12 est basé sur un modèle de distribution spatiale du vent généré par le vortex et de son effet sur l'aéronef suiveur. On peut utiliser, pour ce faire, différents modèles usuels, dont le modèle de Burnham-Hallock. Quant à la signature mesurée, elle représente la mesure de cet effet avec les capteurs de l'aéronef suiveur AC2.

L'unité 5 comporte, de plus, un ensemble de calcul 18. Cet ensemble de calcul 18 comprend :
- un élément de réception de données 19 qui reçoit des données de l'aéronef meneur et notamment des informations pour déduire une distance latérale ΔYFL entre l'aéronef suiveur et l'aéronef meneur ;
- un élément de calcul 20 qui entre les données (reçues par l'élément de réception de données 19) dans le modèle de transport de vortex (via une liaison 21) et qui émet en sortie, via des liaisons 22 et 23, des données Δlnit et ΔAnticp précisées ci-dessous.

Les valeurs reçues par l'élément de réception de données 19 de l'aéronef meneur AC1, et notamment celles pour déterminer la distance latérale ΔYFL, font partie de données transmises par l'aéronef meneur AC1 à l'aéronef suiveur AC2 par un lien de communication usuel, de type TCAS (utilisation du transpondeur), ADS-B ou autre.

L'élément de calcul 20 est configuré pour estimer, à l'aide du modèle de transport de vortex, une vitesse de rapprochement du vortex, vu de l'aéronef suiveur, cette estimation étant ensuite utilisée pour affiner la position optimale.

L'unité 5 comporte, de plus, une unité d'hybridation 24 qui est reliée via une liaison 25 à l'ensemble 12 et via les liaisons 22 et 23 à l'ensemble 18, et qui réalise une hybridation.

L'hybridation permet d'utiliser la signature de l'aéronef suiveur pour se positionner, couplée aux données de l'aéronef meneur.

L'hybridation permet d'améliorer la précision de positionnement en exploitant la signature du vortex mesurée au niveau de l'aéronef suiveur AC2. Certaines propriétés de la signature spatiale du vortex étant connues via le modèle de signature de vortex, la mesure de cette signature au niveau de l'aéronef suiveur AC2 permet d'obtenir un retour en temps réel de la proximité au vortex.

La prise en compte des données de l'aéronef meneur AC1 permet, quant à elle, de gagner en rapidité concernant le positionnement estimé (en particulier lors de mouvements de l'aéronef meneur). Plus précisément :
- les données Δlnit issues du modèle de transport de vortex permettent d'initialiser l'hybridation lors du passage de la position de sécurité à la position optimale ; et
- les données ΔAnticp issues du modèle de transport de vortex permettent d'anticiper les mouvements de l'aéronef meneur AC1 sans attendre que leurs effets soient ressentis par l'aéronef suiveur AC2.

L'hybridation (mise en oeuvre par l'unité d'hybridation 24) entre les données du modèle de transport de vortex et celles de la signature du vortex au niveau de l'aéronef suiveur AC1, est réalisée à l'aide d'un filtre de Kalman.

Le filtre de Kalman qui est intégré dans l'unité d'hybridation 24, embarque un modèle de signature spatial du vortex, et réalise les actions suivantes :
- un filtrage sur la mesure de la signature du vortex, des bruits et biais éventuels ;
- un recalage de l'amplitude du vortex prédite par le modèle, par rapport à la signature effectivement mesurée, la proximité au vortex dépendant de l'amplitude de la signature mesurée ; et
- une comparaison de l'amplitude de la signature avec celle prédite par le modèle (recalé) et une estimation de l'écartement (ou distance) Δecartest de l'aéronef suiveur AC2 par rapport au vortex.

Dans un mode de réalisation préféré, le paramètre d'écartement considéré (Δecartest) correspond à la distance entre le coeur du vortex V1 pris en compte et l'extrémité d'aile de l'aéronef suiveur AC2, qui est la plus proche de ce vortex V1.

L'écartement (ou distance) Δecartest estimé par rapport au vortex V1 dépend ainsi de :
- la différence entre la signature prédite par le modèle de signature de vortex et la signature mesurée, ce terme apportant la précision du positionnement (mais il est relativement lent) ; et
- la vitesse de déplacement du vortex renseignée grâce au modèle de transport de vortex. Ce dernier terme permet de rendre l'estimation très réactive en cas de mouvement de l'aéronef meneur AC1. Pour ce faire, il suffit que la liaison entre les deux aéronefs soit établie, par exemple via un système ADS-B. En cas de perte de cette liaison, l'estimation fonctionne toujours, mais elle est moins réactive, car elle est uniquement basée sur la mesure de l'effet du vortex au niveau de l'aéronef suiveur AC2.

La donnée ΔAnticp est une estimation de la vitesse de rapprochement du vortex vu depuis l'aéronef suiveur AC2, en utilisant uniquement des données du modèle de transport de vortex, c'est-à-dire essentiellement des données de l'aéronef meneur AC1. Dans le filtre de Kalman, cette variable fait en sorte que la variation de la distance au vortex estimée soit cohérente avec la variation mesurée. L'avantage de cette précommande (« feedforward ») est de faire gagner le filtre de Kalman en réactivité. En présence d'un mouvement du vortex, on n'attend pas que la réaction sur l'aéronef suiveur s'établisse, mais on en est informé directement par cette précommande.

L'initialisation (via la donnée Δlnit) est définie par la précision connue a priori des informations fournies par le système ADS-B dont des données GPS (de positionnement) de l'aéronef meneur (typiquement 50 m d'erreur maximum), que le filtre de Kalman s'attache à réduire en exploitant un modèle d'effet du vortex sur l'aéronef suiveur AC2. Pour cela, le dispositif 1 initialise le filtre de Kalman avec les meilleures données dont il dispose avant d'entamer l'approche du vortex, c'est-à-dire les données du modèle de transport de vortex (alimenté notamment par les données GPS transmis par le système ADS-B).

De façon usuelle, le système l'ADS-B fonctionne dans un mode de diffusion. L'aéronef meneur AC1 envoie régulièrement sa position et d'autres informations par une diffusion radio à tous les utilisateurs intéressés, à savoir le contrôle au sol, et également les autres aéronefs s'ils sont équipés d'un récepteur. Le système ADS-B permet ainsi à l'aéronef suiveur AC2 de connaître notamment la position de l'aéronef meneur AC1 ainsi que d'autres informations telles que sa vitesse, son cap, ...

Au sein de l'unité 5, l'ensemble 12 qui utilise des données de l'aéronef suiveur AC2 met en oeuvre ses traitements à basse fréquence, tandis que l'ensemble 18 qui utilise des données de l'aéronef meneur AC1 met en oeuvre ses traitements à haute fréquence.

L'unité 5 comprend, de plus, un élément de calcul 26 qui calcule la différence entre la valeur (d'écartement) estimée Δecartest reçue via une liaison 27 de l'unité d'hybridation 24 et une valeur (d'écartement) désirée Δecart prédéterminée (ou écartement de consigne), reçue via une liaison 28. Cette différence est ensuite transmise à l'unité de commande 6 qui commande, de façon usuelle, l'aéronef suiveur AC 2 conformément à cette valeur.

Pour amener et maintenir l'aéronef suiveur AC2 dans la position optimale PO, l'unité de commande 6 est donc configurée pour commander l'aéronef suiveur AC2 pour qu'il annule la différence entre la valeur d'écartement estimée (de la position courante dudit aéronef suiveur AC2 par rapport au vortex V1) et l'écartement de consigne.

La valeur d'écartement désirée Δecart (ou écartement de consigne) correspond à l'écartement (ou distance) par rapport au vortex à laquelle on souhaite placer l'aéronef suiveur AC2 pour récupérer de la portance générée par le vortex de l'aéronef meneur AC1. Cette valeur représente un compromis entre différents paramètres tels que le bénéfice, le confort, le contrôle, ...

Cet écartement de consigne est inférieur ou égal à une valeur prédéterminée dépendant de caractéristiques de l'aéronef suiveur, par exemple 30 mètres pour un aéronef correspondant à un avion commercial moyen-courrier.

Le dispositif 1, tel que décrit ci-dessus, permet ainsi à l'aéronef suiveur AC2 de disposer de deux positions (position optimale PO et position de sécurité PS) dans la proximité du vortex V1 considéré. Plus particulièrement, ledit dispositif 1 permet à l'aéronef suiveur AC2 de maintenir sa position en fonction des vortex générés par l'aéronef meneur AC1 afin de pouvoir bénéficier des vents ascendants tout en mettant à jour régulièrement les données relatives à l'aéronef meneur AC1.

Le vol en formation mis en oeuvre à l'aide dudit dispositif 1 est le suivant.

Lors du vol en formation, dans la situation normale, et tant que cela reste possible, l'aéronef suiveur AC2 est maintenu dans la position optimale PO où il bénéficie à la fois du vol en formation et des effets positifs du vortex V1.

Quand un évènement particulier prédéterminé se produit, si nécessaire, l'aéronef suiveur AC2 est amené rapidement dans la position de sécurité PS, comme illustré par une flèche B1 sur la figure 2, sans que le vol en formation soit rompu.

Le critère principal pour le passage de l'aéronef suiveur AC2 de la position optimale PO à la position de sécurité PS est la rapidité.

La position de sécurité PS est suffisamment éloignée latéralement de la trajectoire de vol TV et des vortex V1 et V2 (typiquement d'au moins 200 mètres) pour que l'aéronef suiveur AC2 ne ressente aucun effet du vortex V1 le plus proche. Pour se positionner dans cette zone, on utilise des données ADS-B, des données mesurées, ..., qui alimentent le modèle de transport de vortex. Le positionnement de la position de sécurité PS est directement dépendant de la précision du modèle et de ses données d'entrée. Dans la position de sécurité PS, l'aéronef suiveur AC2 reste en vol en formation et est responsable de sa séparation vis-à-vis de l'aéronef meneur AC1.

La position de sécurité PS peut être utilisée, notamment, pour les situations ou évènements suivants :
- pour des conditions météorologiques ne permettant pas de s'asservir finement (par exemple, la traversée d'une zone de turbulence) ;
- pour des manoeuvres particulières des deux aéronefs AC1 et AC2, telles qu'un changement de cap ou un changement de niveau ;
- pour des cas dégradés (panne système, défaillance, ...) de l'aéronef suiveur AC2, qui requièrent des actions du pilote dudit aéronef suiveur AC2 ;
- l'arrivée d'un troisième aéronef sur la zone considérée.

Quand l'événement à l'origine du passage à la position de sécurité PS a cessé, l'aéronef suiveur AC1 est ramené dans la position optimale PO, sans que le vol en formation soit rompu.

Pour ce faire, l'aéronef suiveur AC2 est commandé pour s'approcher latéralement (selon l'axe Y) du vortex V1, comme illustré par une flèche B2 sur la figure 3, et se positionner verticalement, pour sentir peu à peu les effets du vortex, puis initialiser des estimateurs basés sur les capteurs anémométriques, les moments latéraux, les commandes latérales,... On utilise alors l'aéronef suiveur AC2 en tant que capteur ainsi que les différents capteurs usuels de l'aéronef suiveur AC2 pour identifier l'environnement dans lequel on se trouve et le positionner par rapport à des signatures connues de cet environnement. Ce positionnement peut être spatial, mais préférentiellement il se base sur les caractéristiques induites par le vortex : champ de vitesse, circulation, ..., qui génèrent des effets univoques sur l'aéronef suiveur AC2 (moment latéral, portance dissymétriques, ...).

Le critère principal pour le passage de l'aéronef suiveur AC2 de la position de sécurité PS à la position optimale PO (déplacement latéral de Δ*Y* et déplacement vertical de Δ*Z*) est la précision de cette position optimale PO.

Le dispositif 1, tel que décrit ci-dessus, permet ainsi de disposer de deux positions (position optimale PO et position de sécurité PS) asservies vis-à-vis de l'aéronef meneur AC1, ce qui permet de minimiser les ruptures de formation intempestives pour des événements (généralement mineurs) qui ne le justifient pas. Plus précisément, le dispositif 1 permet :
- de définir une position de repli (la position de sécurité PS) qui ne rompt pas la formation et que l'aéronef suiveur AC2 peut rejoindre rapidement ;
- et de cette position de sécurité, de retrouver la position optimale PO qui est définie précisément.

## Revendications

1. Procédé de contrôle de la trajectoire d'un aéronef, dit aéronef suiveur (AC2), par rapport à des vortex (V1, V2) générés par un aéronef dit aéronef meneur (AC1) qui le précède, lesdits aéronefs meneur et suiveur (AC1, AC2) réalisant un vol en formation (F),
**caractérisé en ce qu'**il comporte :
- une première étape de détermination de position, mise en oeuvre par une première unité de détermination de position (3), ladite première étape de détermination de position consistant à déterminer, à l'aide d'un modèle de transport de vortex, une position dite de sécurité (PS), dans laquelle l'aéronef suiveur (AC2) n'est pas soumis à des effets des vortex (V1, V2) générés par l'aéronef meneur (AC1) tout en restant en vol en formation (F) ;
- une seconde étape de détermination de position, mise en oeuvre par une seconde unité de détermination de position (5), ladite seconde étape de détermination de position consistant à déterminer, à l'aide d'un modèle de signature de vortex, une position dite optimale (PO), dans laquelle l'aéronef suiveur (AC2) volant en formation (F) bénéficie d'effets d'au moins l'un (V1) des vortex (V1, V2) générés par l'aéronef meneur (AC1) ;
- une étape de commande mise en oeuvre par une unité de commande (6), ladite étape de commande consistant :
• à amener et à maintenir l'aéronef suiveur (AC2) dans ladite position de sécurité (PS) déterminée à ladite première étape de détermination de position, si et aussi longtemps que des conditions prédéterminées sont remplies ; et
• sinon, à l'amener et à le maintenir dans la position optimale (PO), en mettant en oeuvre conjointement la seconde étape de détermination de position.

2. Procédé selon la revendication 1,
**caractérisé en ce que** la première étape de détermination de position consiste à déterminer, à l'aide du modèle de transport de vortex, un positionnement géographique d'au moins le vortex (V1) le plus proche de l'aéronef suiveur (AC2), parmi lesdits vortex (V1, V2), et à déterminer comme position de sécurité (PS), une position écartée au moins latéralement par rapport à la trajectoire (TV) de l'aéronef meneur (AC1) et située à l'extérieur dudit positionnement géographique du vortex (V1).

3. Procédé selon la revendication 2,
**caractérisé en ce que** la première étape de détermination de position consiste à déterminer comme position de sécurité (PS), une position qui est également écartée verticalement par rapport à la trajectoire (TV) de l'aéronef meneur (AC1).

4. Procédé selon l'une quelconque des revendications 1 à 3,
**caractérisé en ce que** la seconde étape de détermination de position consiste à déterminer la position optimale (PO) à l'aide du modèle de signature de vortex et de mesures courantes représentatives de la signature, réalisées sur l'aéronef suiveur (AC2).

5. Procédé selon l'une quelconque des revendications précédentes,
**caractérisé en ce que** la seconde étape de détermination de position consiste à estimer, à l'aide du modèle de transport de vortex et de données issues de l'aéronef meneur (AC1), une vitesse de rapprochement du vortex, vu de l'aéronef suiveur (AC2), et à utiliser cette estimation pour affiner la position optimale (PO).

6. Procédé selon l'une quelconque des revendications précédentes,
**caractérisé en ce que**, pour amener et maintenir l'aéronef suiveur (AC2) dans ladite position optimale (PO), l'étape de commande consiste à commander l'aéronef suiveur (AC2) pour qu'il annule la différence entre un écartement courant de l'aéronef suiveur (AC2) par rapport au vortex (V1) et un écartement de consigne prédéterminé.

7. Procédé selon la revendication 6,
**caractérisé en ce que** l'écartement correspond à la distance entre le coeur du vortex considéré et l'extrémité d'aile la plus proche de l'aéronef suiveur (AC2), et **en ce que** l'écartement de consigne est inférieur ou égal à une valeur prédéterminée dépendant de l'aéronef suiveur (AC2).

8. Procédé selon l'une quelconque des revendications précédentes,
**caractérisé en ce que** lesdites conditions prédéterminées comprennent au moins l'une des conditions suivantes :
- au moins une condition météorologique particulière ;
- au moins une manoeuvre particulières des aéronefs meneur et suiveur (AC1, AC2) volant en formation (F) ;
- une approche d'au moins un aéronef, autre que l'aéronef meneur (AC1) et l'aéronef suiveur (AC2), dudit vol en formation (F) ;
- au moins une situation de vol dégradée d'au moins l'un des aéronefs meneur et suiveur (AC1, AC2).

9. Dispositif de contrôle de la trajectoire d'un aéronef, dit aéronef suiveur (AC2), par rapport à des vortex (V1, V2) générés par un aéronef dit aéronef meneur (AC1) qui le précède, lesdits aéronefs meneur et suiveur (AC1, AC2) réalisant un vol en formation (F),
**caractérisé en ce qu'**il comporte :
- une première unité de détermination de position (3), ladite première unité de détermination de position (3) étant configurée pour déterminer, à l'aide d'un modèle de transport de vortex, une position dite de sécurité (PS), dans laquelle l'aéronef suiveur (AC2) n'est pas soumis à des effets des vortex (V1, V2) générés par l'aéronef meneur (AC1) tout en restant en vol en formation (F) ;
- une seconde unité de détermination de position (5), ladite seconde unité de détermination de position (5) étant configurée pour déterminer, à l'aide d'un modèle de signature de vortex, une position dite optimale (PO), dans laquelle l'aéronef suiveur (AC2) volant en formation (F) bénéficie d'effets d'au moins l'un (V1) des vortex (V1, V2) générés par l'aéronef meneur (AC1) ; et
- au moins une unité de commande (6), ladite unité de commande (6) étant configurée :
• pour amener et pour maintenir l'aéronef suiveur (AC2) dans ladite position de sécurité (PS) déterminée par ladite première unité de détermination de position (3), si et aussi longtemps que des conditions prédéterminées sont remplies ; et
• sinon, pour l'amener et pour le maintenir dans la position optimale (PO), en agissant conjointement avec ladite seconde unité de détermination de position (5).

10. Aéronef comprenant un dispositif de contrôle (1) selon la revendication 9.
